# EUROPÄISCHE PATENTSCHRIFT

(11) **EP 2 603 461 B1**
(45) Veröffentlichungstag und Bekanntmachung des Hinweises auf die Patenterteilung: **08.10.2014**
(21) Anmeldenummer: 11741590.1
(22) Anmeldetag: 11.08.2011
(51) Int. Cl.: C02F 1/04, C02F 1/20, C02F 1/02, C02F 9/00, B01D 11/04, B01D 3/38, C02F 1/72, C02F 3/00, C07C 201/16, C02F 1/78, C02F 101/38, C02F 103/36

(54) **VERFAHREN ZUR AUFREINIGUNG VON ABWÄSSERN AUS DER AUFARBEITUNG VON ROHEN AROMATISCHEN NITROVERBINDUNGEN**
METHOD FOR TREATING WASTEWATERS FROM THE REPROCESSING OF CRUDE AROMATIC NITRO COMPOUNDS
PROCÉDÉ D'ÉPURATION DES EAUX RÉSIDUAIRES ISSUES DU TRAITEMENT DE COMPOSÉS NITROAROMATIQUES BRUTS

(30) Priorität: 12.08.2010 EP 10172647
(43) Veröffentlichungstag der Anmeldung: 19.06.2013
(73) Patentinhaber: BASF SE, 67056 Ludwigshafen (DE)
(72) Erfinder: LESCHINSKI, Julia, B-1050 Ixelles (Bruxelles) (BE); DENISSEN, Leo, Brasschaat (BE); HECK, Ludwig E., 68535 Edingen-Neckarhausen (DE); GAMMER, Peter, 210019 Nanjing (CN); VAN DE VOORDE, Bart, B-2060 Antwerpen (BE); HEUßLER, Andreas, 67454 Haßloch (DE); NETO, Samuel, B-1050 Bruxelles (BE)
(86) Internationale Anmeldenummer: PCT/EP2011/063835
(87) Internationale Veröffentlichungsnummer: WO 2012/025393

(56) Entgegenhaltungen:
- EP-A1- 1 496 043
- EP-A1- 1 593 654
- EP-A2- 0 953 546
- EP-A2- 1 132 347
- WO-A1-2009/027416
- US-A- 4 241 229
- Markus Dugal: "Nitrobenzene and Nitrotoluenes", Kirk-Othmer Encyclopedia of Chemical Technology Kirk-Othmer Encyclopedia of Chemical Technology, 14. Oktober 2005 (2005-10-14), Seiten 1-30, XP002612077, DOI: 10.1002/0471238961.1409201801041109.a01.pu b2 Gefunden im Internet: URL:http://onlinelibrary.wiley.com/doi/10. 1002/0471238961.1409201801041109.a01.pub2/ pdf [gefunden am 2010-11-30] in der Anmeldung erwähnt

## Beschreibung

Die Erfindung betrifft ein Verfahren zur Aufarbeitung von Abwässern, die bei der Aufreinigung von rohen aromatischen Nitroverbindungen nach der Nitrierung von aromatischen Verbindungen erhalten werden, umfassend folgende Schritte:
(a) Einstufiges oder mehrstufiges Waschen der rohen aromatischen Nitroverbindung unter Erhalt mindestens einer organischen Phase und mindestens einer wässrigen Phase sowie Abtrennung der wässrigen Phase oder der wässrigen Phasen, wobei Schritt (a) die Zugabe einer Base umfasst, die sich von Ammoniak unterscheidet, und anschließend
(b) optional Entfernung organischer Bestandteile aus mindestens einem Teil der in Schritt (a) erhaltenen wässrigen Phase oder wässrigen Phasen durch Strippung vorzugsweise mit Wasserdampf, anschließend
(c) Entfernung organischer Verbindungen aus mindestens einem Teil der aus Schritt (a) beziehungsweise Schritt (b) resultierenden wässrigen Phase öder wässrigen Phasen durch thermolytische Behandlung, anschließend
(d) destillative Abreicherung von Ammoniak aus zumindest einem Teil der aus Schritt (c) resultierenden wässrigen Phase oder wässrigen Phasen, und anschließend
(e) optional Zuführung zumindest eines Teiles der aus Schritt (d) resultierenden wässrigen Phase oder der wässrigen Phasen zu einer biologischen Abwasseraufbereitung.

Aromatische Nitroverbindungen, insbesondere Mononitrobenzol, werden in kommerziellen Verfahren üblicherweise durch direkte Nitrierung von Benzol mit einer Mischung aus Salpetersäure und Schwefelsäure, der sogenannten Nitriersäure, hergestellt. Bei dieser Reaktion handelt es sich um eine Zweiphasenreaktion, deren Reaktionsgeschwindigkeit durch den Massentransfer zwischen den Phasen und durch die chemische Kinetik determiniert wird. Von besonderer industrieller Bedeutung sind kontinuierliche Verfahren, wobei die adiabatische Reaktionsführung in jüngerer Zeit besondere Bedeutung erlangt hat.

Das aus der Nitrierung der aromatischen Ausgangsverbindung erhaltene Reaktionsprodukt (Rohprodukt), insbesondere Mononitrobenzol, fällt zunächst als zweiphasiges Gemisch an, wobei die organische Phase neben der organischen Nitroverbindung weitere organische Nebenprodukte und nicht umgesetzte organische Ausgangsstoffe enthält. Die wässrige Phase umfasst neben organischen Bestandteilen wie zum Beispiel Mononitrobenzol und Benzol natürlich unverbrauchte Nitriersäure. Die säurehaltige wässrige Phase wird nach dem Stand der Technik üblicherweise in einem Säurekon-zentrator (sulfuric acid concentration, SAC) aufkonzentriert und wieder in die Nitrierungsreaktion zurückgeführt.

Die aus der Nitrierung erhaltene organische Phase, nachfolgend als rohe aromatische Nitroverbindung bezeichnet, ist sowohl mit organischen Nebenkomponenten wie z. B. Dinitrobenzol, Benzol, Nitrophenolen als auch mit Nitriersäure verunreinigt und bedarf einer mehrstufigen Aufarbeitung, die hohen Anforderungen hinsichtlich Energie- und Prozesskosten, Ausbeute und Aufreinigung von Abfallströmen nach umwelttechnischen Gesichtspunkten genügen muss.

Verfahren zur Aufarbeitung von rohen aromatischen Nitroverbindungen sind aus dem Stand der Technik bekannt.

Üblicherweise schließt sich an die Abtrennung der rohen aromatischen Nitroverbindung (organische Phase), insbesondere Mononitrobenzol, von der säurehaltigen wässrigen Phase mindestens ein Waschschritt der rohen aromatischen Nitroverbindung mit Wasser oder einer wässrigen Lösung an. Eine mehrstufige, d. h. sequentielle, Durchführung der Schritte Waschen - Abtrennen - Waschen - Abtrennen - usw. ist aus dem Stand der Technik bekannt. Üblicherweise wird in mindestens einer Waschstufe eine Base zugegeben. Durch Zugabe von Basen beträgt der pH-Wert im Anschluss an das Waschen üblicherweise mindestens 8.

Die wässrige Phase, welche aus dem vorgenannten Waschvorgang resultiert (nachfolgend als Abwasser bezeichnet), umfasst neben Wasser und Salzen noch organische Verbindungen wie Mononitrobenzol, Dinitrobenzol, Nitrophenole (mono- und polynitrierte Phenole) und Benzol.

Die erforderliche Abreicherung der unerwünschten organischen Bestandteile aus dem Abwasser vor dessen Einleitung in eine biologische Abwasseraufbereitung (Kläranlage) stellt einen signifikanten Anteil der Investitionskosten bei der Installation von Anlagen zur Herstellung von aromatischen Nitroverbindungen dar.

Die Abtrennung der organischen Bestandteile aus dem Abwasser kann beispielsweise durch eine ggf. mehrstufige Extraktion mit Benzol erfolgen. Ein bekanntes Verfahren ist die ggf. mehrstufige Strippung der organischen Bestandteile mit Wasserdampf, wobei insbesondere leichtsiedende organische Verunreinigungen entfernt werden, und anschließende thermolytische oder oxidative Zersetzung noch vorhandener organischer Bestandteile im resultierenden Abwasser.

So beschreibt die EP 0 953 546 A2 ein Verfahren zum Abbau von aromatischen Nitroverbindungen in Abwässern durch Erhitzung des Abwassers auf Temperaturen von 150 bis 350 °C unter einem Druck von 10 bis 300 bar. Die EP 0 953 546 A2 führt aus, dass die so behandelten Abwässer problemlos biologisch gereinigt werden können.

Die EP 1 593 654 A1 beschreibt ein Verfahren zur Aufarbeitung von alkalischen Abwässern, die bei der Wäsche von rohem Nitrobenzol entstehen, wobei das rohe Nitrobenzol durch adiabate Nitrierung von Benzol mit Nitriersäure hergestellt und anschließend in einer sauren Wäsche und danach in einer alkalischen Wäsche gewaschen wird, wobei ein alkalisches Abwasser enthaltend Benzol in Konzentrationen von 100 bis 3000 ppm und Nitrobenzol in Konzentrationen von 1000 bis 10000 ppm erhalten wird, wobei aus dem alkalischen Abwasser anschließend nicht gelöst vorliegendes Benzol und/oder Nitrobenzol abgeschieden wird, und optional aus dem alkalischen Abwasser anschließend restliches Benzol und/oder Nitrobenzol durch Strippen entfernt wird, und das alkalische Abwasser anschließend unter Ausschluss von Sauerstoff auf Temperaturen von 150 bis 500 °C unter Überdruck erhitzt wird.

Die EP 1 132 347 A2 beschreibt ein Verfahren zur Behandlung von alkalischen Prozessabwässern umfassend aromatische Nitrohydoxyverbindungen aus der Synthese von aromatischen Nitroverbindungen. Dabei wird aufkonzentriertes Abwasser einer Oxidation in überkritischem Wasser unterzogen.
WO 2009/027416 beschreibt ein Verfahren zur Aufarbeitung von Abwässern aus der Nitrierung von aromatischen Verbindungen, die einen pH-Wert von 7-13 aufweisen, durch Erhitzen der Abwässer auf Temperaturen von 150 bis 350°C unter einem Druck von 10 bis 300 bar, in dem vor dem Erhitzen die in diesen Abwässern gelösten aromatischen Nitroverbindungen, die keine Hydroxylgruppe enthalten, durch Extraktion aus den Abwässern entfernt werden.

Durch die Zersetzung von Nitroverbindungen in wässrigen Abwässern nach dem Stand der Technik entsteht jedoch Ammoniak, der sich in biologischen Kläranlagen nachteilig auswirkt. Einer biologischen Abwasseraufbereitung zugeführtes NH₃-haltiges Abwasser muss zunächst einer Nitrifikation unterzogen werden. Als Nitrifikation bezeichnet man die bakterielle Oxidation von Ammoniak (NH₃) zu Nitrat (NO₃⁻). Sie besteht aus zwei gekoppelten Teilprozessen: Im ersten Teil wird Ammoniak zu Nitrit oxidiert, das im zweiten Teilprozess zu Nitrat oxidiert wird. Die Nitrifikation ist mit einer Produktion von Säure (H⁺-Bildung) verbunden, der pH-Wert wird abgesenkt, wenn die gebildete Säure nicht neutralisiert wird, etwa durch Umsetzung mit Calciumcarbonat (CaCO₃). Die gebildete Säure belastet die Pufferkapazität des Wassers und kann das Wasser bzw. den Boden versäuern. Da nitrifizierende Mikroorganismen nur im neutralen bis leicht alkalischen Bereich stoffwechseln, kann durch die Versäuerung die vollständige Umwandlung des fischtoxischen Ammoniums/Ammoniak in Abwasser-Kläranlagen verhindert werden (Autoinhibition).

Das gebildete Nitrat wird anschließend in einer weiteren Stufe der biologischen Abwasserbehandlung einer Denitrifikation unter Bildung von N₂ unterzogen. Unter Denitrifikation versteht man die Umwandlung des im Nitrat (NO₃⁻) gebundenen Stickstoffs zu molekularem Stickstoff (N₂) durch bestimmte heterotrophe und einige autotrophe Bakterien, die danach als Denitrifikanten bezeichnet werden.

Es wäre somit wünschenswert, ein Abwasser aus oben genanntem Prozess bereitzustellen, welches Stickstoff in möglichst geringen Mengen enthält, so dass insbesondere eine Nitrifikation als erste Stufe einer biologischen Abwasseraufbereitung unterbleiben kann. Dies hätte große ökonomische und ökologische Vorteile. Gleichzeitig sollte der energetische Aufwand zur Erzeugung des genannten Abwassers möglichst gering sein.

Somit war die Aufgabe der vorliegenden Erfindung, ein Verfahren zur Aufarbeitung von Abwässern aus der Nitrierung von aromatischen Verbindungen bereitzustellen, welches die vorgenannten Nachteile nicht oder in geringerem Umfang aufweist. Insbesondere sollte der Ammoniakgehalt im Abwasser, welches bei der Nitrierung von aromatischen Verbindungen und anschließender Entfernung organischer Bestandteile anfällt, reduziert werden. Die anschließende Nitrifikation in einer ersten Stufe einer anschließenden biologischen Abwasseraufbereitung sollte möglichst unterbleiben können. Gleichzeitig sollte das Verfahren mit möglichst geringem Energieraufwand operieren und technisch einfach zu realisieren sein.

Die vorgenannten Aufgaben werden gelöst durch das erfindungsgemäße Verfahren zur Aufarbeitung von Abwässern, die bei der Aufreinigung von rohen aromatischen Nitroverbindungen nach der Nitrierung von aromatischen Verbindungen erhalten werden. Bevorzugte Ausführungsformen sind den Ansprüchen und der nachfolgenden Beschreibung zu entnehmen. Kombinationen bevorzugter Ausführungsformen verlassen den Rahmen der vorliegenden Erfindung nicht, insbesondere, was Kombinationen bevorzugter Ausführungsformen unterschiedlicher Schritte des erfindungsgemäßen Verfahrens angeht.

Erfindungsgemäß umfasst das Verfahren folgende Schritte:
(a) Einstufiges oder mehrstufiges Waschen der rohen aromatischen Nitroverbindung unter Erhalt mindestens einer organischen Phase und mindestens einer wässrigen Phase sowie Abtrennung der wässrigen Phase oder der wässrigen Phasen, wobei Schritt (a) die Zugabe einer Base umfasst, die sich von Ammoniak unterscheidet, und anschließend
(b) optional Entfernung organischer Bestandteile aus mindestens einem Teil der in Schritt (a) erhaltenen wässrigen Phase oder wässrigen Phasen durch Strippung vorzugsweise mit Wasserdampf, anschließend
(c) Entfernung organischer Verbindungen aus mindestens einem Teil der aus Schritt (a) beziehungsweise Schritt (b) resultierenden wässrigen Phase oder wässrigen Phasen durch thermolytische Behandlung, anschließend
(d) destillative Abreicherung von Ammoniak aus mindestens einem Teil der aus Schritt (c) resultierenden wässrigen Phase oder wässrigen Phasen, und anschließend
(e) optional Zuführung zumindest eines Teiles der aus Schritt (d) resultierenden wässrigen Phase zu einer biologischen Abwasseraufbereitung.

Das vorliegende Verfahren ist insbesondere für die Aufarbeitung von Abwässern geeignet, welche bei der Aufreinigung von rohem Nitrobenzol entstehen, welches durch Nitrierung von Benzol erhalten wurde. Aus diesem Grund wird das Verfahren exemplarisch anhand dieser speziellen Aufreinigung erläutert. Der Fachmann kann jedoch die genannten Ausführungsformen ohne Schwierigkeiten auf andere aromatische Ausgangsverbindungen als Benzol beziehungsweise auf andere Produkte als Mononitrobenzol übertragen.

Die Abwässer, die mit dem erfindungsgemäßen Verfahren behandelt werden können, stammen vorzugsweise aus Nitrierungsanlagen zur Nitrierung von aromatischen Verbindungen wie z.B. Nitrobenzolanlagen, Dinitrotoluolanlagen und Nitrotoluol- und Nitroxylolanlagen.

Die Nitrierung von aromatischen Ausgangsverbindungen (insbesondere Benzol) zu aromatischen Nitroverbindungen (insbesondere Mononitrobenzol) kann nach den aus dem Stand der Technik bekannten Verfahren erfolgen. Geeignete Verfahren werden beispielsweise in der EP 043 6 443 A2 und in Kirk-Othmer, Encyclopedia of Chemical Technology, Vol. 17, "Nitrobenzene and Nitrotoluenes" beschrieben.

### Schritt (a)

Der Begriff "Waschen" kennzeichnet im Rahmen der vorliegenden Erfindung das Inkontaktbringen einer organischen Phase mit einer wässrigen Phase, wobei mindestens ein Bestandteil der organischen Phase zumindest teilweise in die wässrige Phase übergeht. Das Waschen organischer Phasen und die anschließende oder gleichzeitige Abtrennung der Phasen ist dem Fachmann an sich bekannt und kann in an sich bekannten Apparaturen wie Misch-Abtrenneinheiten (Mischeinheit gefolgt von Abtrenneinheit) oder Extraktoren wie z. B. Extraktionskolonnen erfolgen.

Die in der vorgenannten Nitrierung der aromatischen Ausgangsverbindung (insbesondere Benzol) hergestellte rohe aromatische Nitroverbindung (insbesondere Mononitrobenzol) wird erfindungsgemäß zunächst in einem ein- oder mehrstufigen Prozess mit Wasser oder einer wässrigen Lösung in Kontakt gebracht, wobei mindestens eine organische Phase und mindestens eine wässrige Phase erhalten wird (Waschvorgang). Gleichzeitig oder bevorzugt anschließend erfolgt die Abtrennung der wässrigen Phase beziehungsweise der wässrigen Phasen.

Vorzugsweise erfolgt das Waschen unter Vermischen und/oder Rühren, so dass ein ausreichender Kontakt zwischen organischer Phase und wässriger Phase vorliegt.

Das Waschen kann erfindungsgemäß in einem ein- oder mehrstufigen Prozess erfolgen, vorzugsweise indem die rohe aromatische Nitroverbindung den Waschvorgang mit Wasser oder einer wässrigen Lösung und den Abtrennvorgang von der wässrigen Phase einmal oder nacheinander mehrmals durchläuft. Im letzteren Fall wird Schritt (a) mehrfach nacheinander durchlaufen. Der Begriff "nacheinander mehrmalige Durchführung von Schritt (a)" wird im Rahmen der vorliegenden Erfindung synonym zu dem Begriff "mehrstufige Durchführung von Schritt (a)" verwendet. Sofern Schritt (a) mehrstufig durchgeführt wird, können eine einzige oder mehrere wässrige Phasen entstehen, die unterschiedliche Gehalte an extrahierten Verbindungen oder gegebenenfalls unterschiedliche Verbindungen enthalten.

In einer bevorzugten Ausführungsform umfasst Schritt (a) die mehrfache Ausführung der Stufen Waschen und Abtrennen, wobei eine einzige wässrige Phase mehrfach mit einer organischen Phase in Kontakt gebracht wird. In dieser Ausführungsform entsteht lediglich eine aus Stufe (a) resultierende wässrige Phase, da diese nacheinander in mehreren Stufen mit der organischen Phase in Kontakt gebracht wird und schließlich das Abwasser aus Schritt (a) bildet.

In einer weiteren bevorzugten Ausführungsform entstehen mehrere, insbesondere zwei separate Abwasserströme, die aus der mehrstufigen Durchführung von Schritt (a) resultieren. Es ist möglich, lediglich ein Teil, insbesondere eine der aus Schritt (a) resultierenden wässrigen Phasen den erfindungsgemäß nachfolgenden Schritten zuzuführen. Alternativ ist es auch möglich, die genannten mehreren wässrigen Phasen zu vereinigen und anschließend den erfindungsgemäß nachfolgenden Schritten zuzuführen.

Die aus Schritt (a) resultierende wässrige Phase beziehungsweise die wässrigen Phasen werden nachfolgend gemeinsam als Abwasser bezeichnet.

Schritt (a) umfasst erfindungsgemäß die Zugabe einer Base, die sich von Ammoniak unterscheidet. Vorzugsweise umfasst Schritt (a) die Zugabe eines Alkalimetallcarbonats wie Natriumcarbonat oder eines Alkalimetallhydroxids als Base, wobei Alkalimetallhydroxide als Base besonders bevorzugt sind, insbesondere Lithiumhydroxid, Natriumhydroxid, Kaliumhydroxid und/oder Rubidiumhydroxid. Natriumhydroxid ist als Base ganz besonders bevorzugt.

Die Zugabe der genannten Basen erfolgt insbesondere im Rahmen mindestens einer Waschstufe. Eine Waschstufe unter Zugabe einer Base wird als alkalische Wäsche bezeichnet. Die Zugabe von Ammoniak als Base im Rahmen von Schritt (a) ist unerwünscht, da dann der erfindungswesentliche Schritt (d) infolge der Anreicherung von Ammoniak wesentlich erschwert wird.

Vorzugsweise beträgt der pH-Wert des Abwassers nach Schritt (a) von 7 bis 14, vorzugsweise 8 bis 14, insbesondere 9 bis 13. Die Zugabe der Base erfolgt vorzugsweise in Form von wässrigen Lösungen der Base, d. h. zumindest Teile der in Schritt (a) eingesetzten wässrigen Lösung enthalten die genannte Base. Die vorzugsweise im Überschuss zugesetzte Base neutralisiert die resultierende Nitriersäure unter Bildung von löslichen Salzen.

In einer Ausführungsform von Schritt (a) erfolgt zunächst eine saure Wäsche der rohen aromatischen Nitroverbindung. Bevorzugt wird dabei eine Säurekonzentration von 0,5 bis 2 Gew.-% Schwefelsäure bezogen auf die wässrige Phase eingestellt. Insbesondere erfolgt unmittelbar anschließend eine alkalische Wäsche unter Zugabe einer Base. Die alkalische Wäsche erfolgt vorzugsweise unter den oben genannten Bedingungen.

Das aus Schritt (a) resultierende Abwasser enthält üblicherweise neben Wasser noch Restmengen an Benzol und Nitrobenzol sowie Nitrophenole. Das aus Schritt (a) resultierende Abwasser enthält typischerweise Benzol in Konzentrationen von 10 bis 3000 ppm, vorzugsweise von 100 bis 1000 ppm und Nitrobenzol in Konzentrationen von 500 bis 10000 ppm, vorzugsweise von 1200 bis 8000 ppm. Das Abwasser enthält ferner üblicherweise Nitrophenolate in einer Konzentration von 1000 bis 20000 ppm, insbesondere 2000 bis 8000 ppm. Die Einheit ppm bezieht sich im Rahmen der vorliegenden Erfindung grundsätzlich auf Gewichtsanteile.

Insbesondere seien folgende Nitrophenole, die auch in Form ihrer wasserlöslichen Salze vorliegen können, genannt: Mono-, Di- und Trinitrophenole, Mono-, Di- und Trinitrokresole, Mono-, Di- und Trinitroresorcine, Mono-, Di-und Trixylenole. Als Salzbildner kommen alle Metalle in Betracht, die mit den Nitrophenolen wasserlösliche Salze zu bilden vermögen. Bevorzugt seien die Alkalimetalle genannt, z.B. Lithium, Natrium, Kalium und Rubidium.

In einer bevorzugten Ausführungsform wird in Anschluss an Schritt (a) und vor Durchführung von Schritt (b) beziehungsweise Schritt (c) aus dem Abwasser noch enthaltenes, nicht gelöst vorliegendes Benzol und/oder Nitrobenzol abgetrennt.

Die Abtrennung des nicht gelöst vorliegenden Nitrobenzols kann dabei durch Abscheider, Absetzbehälter oder andere Phasentrennapparaturen erfolgen. Bevorzugt wird ein Absetzbehälter eingesetzt. Die genannte Abtrennung kann alternativ in Form einer Extraktion durchgeführt werden, wie sie in der WO 2009/027416 beschrieben wird, auf deren Inhalt hiermit in vollem Umfang Bezug genommen wird.

Das so abgetrennte Benzol und/oder Nitrobenzol wird dann bevorzugt wieder dem Nitrierprozess bzw. dem rohen Nitrobenzol zugeführt.

### Schritt (b)

In einer bevorzugten Ausführungsform erfolgt gemäß Schritt (b) die Entfernung organischer Bestandteile aus mindestens einem Teil der in Schritt (a) erhaltenen wässrigen Phase oder wässrigen Phasen durch Strippung.

Unter Strippen ist die Entfernung von bestimmten flüchtigen Bestandteilen aus Flüssigkeiten durch das Durchleiten von Gasen (Luft, Wasserdampf, etc.) zu verstehen, wobei die genannten Bestandteile in die Gasphase übergeführt werden beziehungsweise mit der Gasphase aus der Flüssigkeit ausgetragen werden.

Vorzugsweise wird die Strippung im Rahmen der vorliegenden Erfindung mit Wasserdampf durchgeführt. Die Strippung erfolgt vorzugsweise in einer Strippkolonne, wobei die organischen Bestandteile, insbesondere Benzol und Nitrobenzol, über Kopf abgetrennt werden. Die Strippkolonne ist vorzugsweise eine röhrenförmige Einrichtung mit Einbauten zum intensiven Stoffaustausch von gasförmiger und flüssiger Phase. Vorzugsweise wird die Flüssigkeit im Gegenstrom, das heißt gegen die Fließrichtung des Gases, durch die Strippkolonne geleitet. Entsprechende Verfahren und Kolonnen sind dem Fachmann bekannt und z.B. in W. Meier, Sulzer, Kolonnen für Rektifikation und Absorption, in: Technische Rundschau Sulzer, 2 (1979), Seite 49 ff, beschrieben.

Bevorzugte Verfahren sind beispielsweise die Strippung in einer Kolonne, die vorzugsweise mit zufälligen Schüttungen aus Füllkörpern, mit strukturierten Packungen oder mit Stoffaustauschböden wie z.B. Siebböden, Glockenböden, Tunnelböden oder Thormannböden gefüllt ist. Vorzugsweise wird die Strippung gemäß Schritt (b) bei einem absoluten Druck von 0,1 bis 10 bar, insbesondere 1 bis 5 bar und einer Temperatur von 35 bis 180 °C, insbesondere bei 100 bis 160 °C durchgeführt.

Das im Rahmen von Schritt (b) anfallende, die aromatische Ausgangsverbindung und die aromatische Nitroverbindung sowie nicht-aromatische organische Verbindungen enthaltende Kondensat wird anschließend einem Phasenscheider zugeführt, wobei die organische Phase bevorzugt in die Wäsche in Schritt (a) zurückgeführt wird und die wässrige Phase erneut Schritt (b) zugeführt wird. In einer bevorzugten Ausführungsform wird der über Kopf der Strippkolonne erhaltene Wasserdampf einschließlich der organischen Bestandteile als Wärmeüberträger im Rahmen von Schritt (d) verwendet und das dabei anfallende Kondensat einem Phasenscheider zugeführt, wobei die organische Phase bevorzugt in die Wäsche in Schritt (a) zurückgeführt wird und die wässrige Phase vorzugsweise erneut Schritt (b) zugeführt wird. Diese bevorzugte Ausführungsform wird im Rahmen von Schritt (d) weiter erläutert.

Aus Sicherheitsgründen ist eine fehlerfreie Funktion von Schritt (b) wünschenswert. Eine Fehlfunktion der Strippkolonne kann beispielsweise durch redundante Sicherheitseinrichtungen überwacht werden.

Bevorzugt wird in Schritt (b) ein alkalisches Abwasser erhalten, das Benzol nur noch in Konzentrationen von höchstens 30 ppm, insbesondere höchstens 5 ppm, und Nitrobenzol in Konzentrationen von höchstens 50 ppm, insbesondere höchstens 20 ppm, enthält.

Schritt (b) wird vorzugsweise in Gegenwart von Entschäumungsmitteln durchgeführt. Geeignete Entschäumungsmittel sind dem Fachmann bekannt. Alternativ können mechanische Mittel zur Entschäumung vorgesehen werden. Entsprechende Mittel sind dem Fachmann ebenfalls bekannt.

### Schritt (c)

Im Rahmen der vorliegenden Erfindung erfolgt im Rahmen von Schritt (c) die Entfernung organischer Verbindungen aus mindestens einem Teil der aus Schritt (a) beziehungsweise Schritt (b) resultierenden wässrigen Phase oder wässrigen Phasen durch thermolytische Behandlung.

Die Entfernung organischer Verbindungen aus mindestens einem Teil der aus Schritt (a) beziehungsweise Schritt (b) resultierenden wässrigen Phase oder wässrigen Phasen durch thermischen Abbau wird nachfolgend als Thermolyse bezeichnet.

Vorzugsweise wird in Schritt (c) das aus den Schritten (a) beziehungsweise (b) erhaltene Abwasser, das noch mit organischen Salzen der Nitrohydroxyaromaten beladen ist, unter Ausschluss von Sauerstoff auf Temperaturen von 150 bis 500 °C, vorzugsweise von 250 bis 350 °C, besonders bevorzugt 250 bis 300 °C unter Überdruck erhitzt. Es ist auch möglich, die Abwässer unter Inertgasatmosphäre bzw. unter einem Inertgas-Vordruck von beispielsweise 0,1 bis 100 bar zu erhitzen. Als Inertgase sind z.B. Stickstoff und/oder Argon geeignet. Je nach Temperatur und gegebenenfalls Inertgas-Vordruck stellen sich beim Erhitzen der Abwässer bevorzugt absolute Drücke im Bereich von 50 bis 350 bar, besonders bevorzugt 50 bis 200 bar, ganz besonders bevorzugt 70 bis 130 bar, ein. Die Erhitzung des alkalischen Abwassers und Zersetzung der organischen Bestandteile wie Benzol, Nitrobenzol und Nitrophenole erfolgt dabei üblicherweise für 5 bis 120 min, bevorzugt 20 bis 45 min.

Das Abwasser wird in Druckbehältern bei einer Temperatur von 150 °C bis 350 °C, vorzugsweise 250 °C bis 300 °C, einem Druck von 10 bar bis 200 bar, vorzugsweise 70 bar bis 150 bar und einem pH-Wert des Abwassers von 8 bis 14, vorzugsweise 9 bis 13 thermolysiert.

Als Druckbehälter können alle aus dem Stand der Technik bekannten Druckbehälter eingesetzt werden, die für die oben genannten Temperaturen und Drücke ausgelegt sind. Für eine kontinuierliche Verfahrensführung eignen sich beispielsweise Rohrreaktoren und in Kaskade geschaltete Autoklaven.

In einer bevorzugten Ausgestaltung wird das Abwasser mit einer Pumpe durch einen Wärmetauscher gefördert, in dem es z.B. auf 280 °C vorgewärmt wird. Anschließend wird das vorgewärmte Abwasser durch Direkteinspeisung von 100 bar Dampf oder durch eine indirekte Beheizung auf 300 °C erhitzt. Nach einer Verweilzeit von 20 min bis 60 min wird die Reaktionslösung im Gegenstrom mit dem Feed abgekühlt und entspannt.

Zur kontinuierlichen Ausgestaltung des Verfahrens benutzt man vorzugsweise einen Rohrreaktor, in welchem die Strömung der Flüssigkeit so eingestellt ist, dass eine Rückvermischung unterbleibt.

Vorzugsweise wird Schritt (c) als Thermolyse in Abwesenheit eines Inertgases bei einem absoluten Druck von 50 bis 350 bar und einer Temperatur von 150 bis 500 °C durchgeführt.

Nach Abschluss von Schritt (c) beträgt der Gehalt an Nitrophenolen im Abwasser vorzugsweise höchstens 100 ppm, insbesondere höchstens 30 ppm. Der Gehalt an Ammoniak im Abwasser, welches aus Schritt (c) resultiert, beträgt üblicherweise von 100 bis 3000 ppm, insbesondere von 500 bis 1500 ppm. Der Gehalt an Nitrat im Abwasser, welches aus Schritt (c) resultiert, beträgt üblicherweise von 5 bis 500 ppm, insbesondere von 20 bis 300 ppm. Der Gehalt an Nitrit im Abwasser, welches aus Schritt (c) resultiert, beträgt üblicherweise von 200 bis 10000 ppm, insbesondere von 500 bis 3000 ppm. Der Gehalt an organisch gebundenem Stickstoff (atomar berechnet) im Abwasser, welches aus Schritt (c) resultiert, beträgt üblicherweise von 5 bis 200 ppm, insbesondere von 5 bis 40 ppm.

### Schritt (d)

Gemäß der vorliegenden Erfindung erfolgt im Rahmen von Schritt (d) die destillative Abreicherung von Ammoniak aus der aus Schritt (c) resultierenden wässrigen Phase oder wässrigen Phasen. Ammoniak ist ein unerwünschtes, aber zumindest in Spuren unvermeidliches Reaktionsprodukt der vorgelagerten Schritte des erfindungsgemäßen Verfahrens, insbesondere Schritt (c). Ammoniak kann weiterhin durch Verwendung von mit Ammoniak verunreinigten wässrigen Phasen in den Prozess eingeschleppt werden.

Die Destillation der aus Schritt (c) resultierenden wässrigen Phase(n) kann dabei nach an sich bekannten Verfahren erfolgen.

Vorzugsweise wird die Destillation gemäß Schritt (d) bei einem absoluten Druck von 0,1 bis 10 bar, insbesondere 1 bis 5 bar durchgeführt, wobei der genannte Druck am Kopf der Destillationsapparatur vorliegt.

Vorzugsweise wird die destillative Entfernung von Ammoniak gemäß Schritt (d) bei einer Temperatur von 80 bis 140 °C durchgeführt, wobei die genannte Temperatur am Kopf der Destillationsapparatur vorliegt.

Bevorzugt beträgt der Gehalt an Ammoniak in der wässrigen Phase in Anschluss an Schritt (d) höchstens 100 ppm, insbesondere höchstens 20 ppm, besonders bevorzugt höchstens 10 ppm.

Die destillative Abreicherung von Ammoniak aus der aus Schritt (b) resultierenden wässrigen Phase(n) wird bevorzugt bei Temperaturen von 50 bis 160 °C und absoluten Drücken von 0,1 bis 10 bar, insbesondere 1 bis 5 bar realisiert.

Die destillative Abreicherung von Ammoniak kann in bekannten Apparaturen erfolgen. Die Verdampfung von Ammoniak erfolgt geeigneter weise in einer Destillationskolonne. Die Kolonne kann dabei mit dem Fachmann bekannten unstrukturierten Packungen wie z.B. zufälligen Schüttungen aus Füllkörpern, mit strukturierten Packungen oder mit Stoffaustauschböden wie z.B. Siebböden, Glockenböden, Tunnelböden oder Thormannböden gefüllt sein. In einer besonders bevorzugten Ausführungsform werden unstrukturierte oder strukturierte Packungen und Stoffaustauschböden miteinander kombiniert, so dass ein optimaler Trenneffekt erreicht wird.

Der Wärmeeintrag in die Destillationskolonne erfolgt vorzugsweise durch einen angekoppelten Verdampfer. Hierdurch lässt sich Schritt (d) in energetisch besonders günstiger Weise in das Verfahren integrieren.

Ein Verdampfer ist in der Verfahrenstechnik ein Apparat zur Umwandlung einer Flüssigkeit in ihren dampfförmigen Zustand. Zur Verdampfung der Flüssigkeit ist die Zuführung thermischer Energie erforderlich. Verdampfer bestehen deshalb in der Regel aus einer Oberfläche, durch die Wärme von einem Wärmeträger, vorzugsweise eine Flüssigkeit, auf die zu verdampfende Flüssigkeit übertragen wird. Im Rahmen der vorliegenden Erfindung bevorzugt sind Verdampfer, welche die erforderliche Wärme indirekt übertragen (kein direkter Kontakt zwischen Wärmeträger und zu verdampfende Flüssigkeit). Entsprechend Verdampfer sind dem Fachmann an sich bekannt. Geeignete Verdampfer sind insbesondere Naturumlaufverdampfer, Zwangsumlaufverdampfer, Kettle-Verdampfer, Dampfkessel, Fallfilmverdampfer und Dünnschichtverdampfer. Besonders geeignet sind Verdampfer auf Basis eines Rohrbündels. Besonders bevorzugt sind Fallfilmverdampfer.

In einer besonders bevorzugten Ausführungsform erfolgt die wärmetechnische Kopplung von Schritt (d) an mindestens eine vorausgehende Stufe, insbesondere Stufe (b).

Dabei wird die aus Stufe (b) resultierende Dampfphase vorzugsweise zur indirekten Wärmeübertragung in Stufe (d) verwendet. Besonders bevorzugt wird die aus Stufe (b) resultierende Dampfphase als Wärmeüberträger in einen Verdampfer im Rahmen von Stufe (d) eingeführt.

Vorzugsweise wird der Wärmeüberträger in Anschluss an die Stufe (d) zumindest teilweise in die Stufe (a) zurückgeführt. In einer besonders bevorzugten Ausführungsform wird der Wärmeüberträger in Anschluss an die Stufe (d) einer Phasentrennung unter Erhalt einer organischen Phase und einer wässrigen Phase unterzogen, wobei die erhaltene organische Phase in die Stufe (a) zurückgeführt wird. Vorzugsweise wird die erhaltene wässrige Phase Schritt (b) zugeführt.

Das durch das erfindungsgemäße Verfahren erhältliche, ganz oder teilweise von Ammoniak befreite Abwasser kann unmittelbar, d. h. ohne weitere Trennschritte, einer biologischen Abwasseraufbereitung, insbesondere einer Kläranlage, zugeführt werden. Das hierbei erhaltene Kopfprodukt enthaltend Ammoniak wird vorzugsweise nach dem Fachmann an sich bekannten Methoden kondensiert und vorzugsweise teilweise als Kondensatrücklauf in die Destillationskolonne im Rahmen von Schritt (d) zurückgeführt und teilweise einer weiteren Aufarbeitung, vorzugsweise einer Verbrennung, zugeführt. Nicht kondensierte Bestandteile können einer weiteren Abgasbehandlung zugeführt werden.

### Schritt (e)

Im Rahmen des bevorzugt ausgeführten Schrittes (e) erfolgt anschließend an Schritt (d) die Zuführung zumindest eines Teiles der aus Schritt (d) resultierenden wässrigen Phase zu einer biologischen Abwasseraufbereitungsstufe. Die Zuführung zumindest eines Teiles der aus Schritt (d) resultierenden wässrigen Phase zu einer biologischen Abwasseraufbereitungsstufe erfolgt außerdem vorzugsweise unmittelbar in Anschluss an Schritt (d), d.h. ohne die Durchführung einer weiteren Maßnahme zur Aufreinigung der der biologischen Abwasseraufbereitungsstufe zugeführten wässrigen Phase und insbesondere ohne die Durchführung einer Nitrifikation.

Entsprechende Verfahren zur biologischen Abwasseraufbereitung sind dem Fachmann an sich ebenfalls bekannt und beispielsweise in Ullmann's Encyclopedia of Industrial Chemistry 7th edition (Chapter Waste Water), 2005 Wiley-VCH Verlag GmbH & Co. KGaA, Weinheim ausführlich beschrieben.

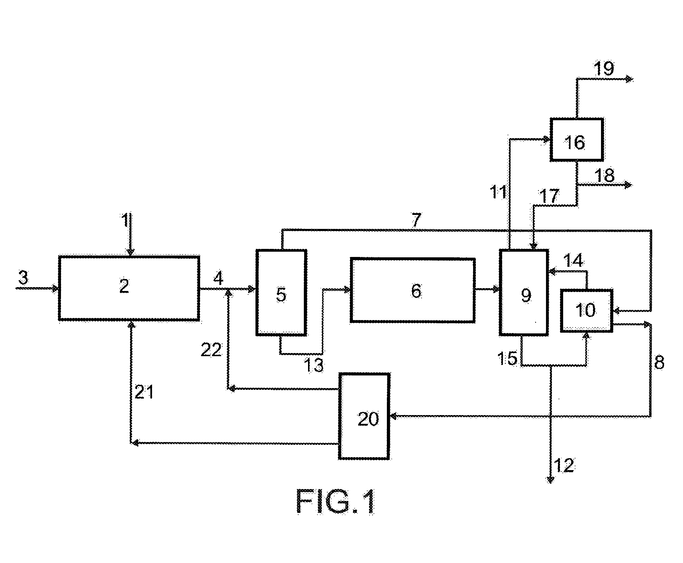

Eine bevorzugte Ausführungsform der vorliegenden Erfindung ist in Figur 1 dargestellt.

In Figur 1 bedeuten:
1 - Zuführung von Base und Wasser
2 - Wasch- und Abtrenneinheit(en)
3 - Strom von rohem Nitrobenzol
4 - Abwasserstrom
5 - Strippingeinheit
6 - Thermolyseeinheit
7 - Wasserdampfstrom aus Strippung
8 - Kondensatstrom aus Verdampfer
9 - Destillationskolonne (Ammoniakdestillation)
10 - Verdampfer
11 - Strom zum Kopfkondensator der Kolonne
12 - Strom zur biologischen Abwasseraufbereitung
13 - Sumpfprodukt aus Strippung
14 - Wasserdampfstrom aus Verdampfer
15 - Sumpfprodukt aus Ammoniakdestillation
16 - Kopfkondensator der Ammoniakdestillation
17 - Kondensatrücklauf auf die Kolonne
18 - Kopfprodukt der Ammoniakdestillation
19 - Nicht kondensierbare Komponenten des Kopfproduktes
20 - Phasenscheider
21 - organische Phase aus Phasenscheider
22 - wässrige Phase aus Phasenscheider

Der Strom von rohem Mononitrobenzol (3) aus der Nitrierung von Benzol wird einer Wasch- und Abtrenneinheit (2) zugeführt. Die Wasch- und Abtrenneinheit (2) besteht vorzugsweise aus mehreren Einheiten, in denen die Stufen Waschen und anschließend Abtrennung der wässrigen Phase mehrfach ausgeführt werden. Der Wasch- und Abtrenneinheit (2) werden eine Base, insbesondere Natriumhydroxid, sowie Wasser zusammen oder getrennt zugeführt (1) und der pH-Wert des Abwasserstromes (4) dabei auf 8 bis 14, insbesondere 9 bis 13, eingestellt. Der aus der Abtrennung der wässrigen Phase in der Wasch- und Abtrenneinheit (2) resultierende Abwasserstrom (4) wird einer Strippingeinheit (5) zugeführt, in der organische Verbindungen weitgehend abgetrennt werden. Das aus der Strippingeinheit resultierende Sumpfprodukt (13), welches der weitgehend von den organischen Verbindungen befreite Abwasserstrom ist, wird anschließend einer Thermolyseeinheit (6) zugeführt, in der restliche organische Bestandteile weitgehend zersetzt werden. Anschließend wird der Abwasserstrom der Destillationskolonne (9) zur destillativen Abreicherung von Ammoniak zugeführt. Zwecks Wärmeintegration wird der Wasserdampfstrom aus der Strippung (7) als Wärmeträgerstrom einem Verdampfer (10) zugeführt und zur Verdampfung von Teilen des Sumpfproduktes aus der Ammoniakdestillation (15) verwendet, welches als Wasserdampfstrom aus dem Verdampfer (14) in die Destillationskolonne (9) der Ammoniakdestillation zurückgeführt wird. Der Strom des abgekühlten Kondensats aus dem Verdampfer (8) wird zunächst einem Phasenscheider (20) zugeführt. Die resultierende organische Phase (21) wird in die Wasch- und Abtrenneinheit (2) zurückgeführt. Die resultierende wässrige Phase (22) wird der Strippingeinheit (5) zugeführt. Das Kopfprodukt der Destillationskolonne (11) wird in einem Kondensator (16) kondensiert, wobei ein Teil des Kondensats (17) der Ammonaikdestillation (9) erneut als Rücklauf zugeführt wird. Das nicht zurückgeführte Kondensat (18) wird entsorgt, z.B. durch Verbrennung. Die nicht kondensierten Bestandteile des Kopfproduktes (19) werden der weiteren Abgasreinigung zugeführt. Das Sumpfprodukt (12) aus der Ammoniakdestillation wird einer biologischen Abwasseraufbereitung zugeführt.

### Beispiele

### Beispiel 1

Zunächst wurde gemäß Beispiel 1 aus der Anmeldung WO 0164333 (A2) und anschließender Phasentrennung rohes Mononitrobenzol erhalten.

Die mehrstufige Wäsche des so erhaltenen rohen Mononitrobenzols (Schritt a des erfindungsgemäßen Verfahrens) ergab zwei Abwasserströme. Die erste Wäsche mit einem Massenverhältnis Wasser zu Mononitrobenzol von 0,4 führte zu einem Abwasser mit 6500 Gew.-ppm phenolischen Nebenkomponenten und 3100 Gew.-ppm anderer aromatischer Komponenten wie Benzol und Mononitrobenzol, das Abwasser aus der zweiten Wäsche mit einem Verhältnis Wasser zu Mononitrobenzol von 0,3 enthielt zusammen 3225 Gew.-ppm Benzol und Mononitrobenzol. Die organischen Nebenbestandteile beider Abwasserströme wurden durch Strippung mit Wasserdampf entfernt (Schritt b des erfindungsgemäßen Verfahrens). Der absolute Druck bei der Strippung betrug 3,5 bar. Der Verbrauch an Wasserdampf im Rahmen von Schritt b betrug 8,3 Tonnen pro Stunde bei einem der Strippung zugeführten Abwasser-Strom von 58 Tonnen pro Stunde.

Im Kopf der zur Strippung verwendeten Kolonne wurden 7,4 Tonnen pro Stunde eines Gemisches erhalten, welches vor allem Wasser, Benzol, nicht-aromatische organische Bestandteile und Mononitrobenzol enthielt. Das genannte Kopfprodukt wurde den Verdampfern der Destillationskolonne zur Ammoniakdestillation zugeführt und dort kondensiert. Nach Kondensation des Kopfproduktes wurde die resultierende Flüssigkeit gesammelt und auf 40°C abgekühlt. Anschließend wurde die Flüssigkeit einem Abscheider zugeführt. Im Abscheider bildeten Mononitrobenzol, Benzol and nicht-aromatische organische Bestandteile eine organische Phase, die in die Wascheinheit zurückgeführt wurde. Die wässrige Phase aus dem Abscheider, die mit organischen Bestandteilen gesättigt war, wurde zur Strippungseinheit zurückgeführt.

Am Kopf der Ammoniak-Destillationskolonne, die ausschließlich mit dem Kopfprodukt aus Schritt (b) des erfindungsgemäßen Verfahrens beheizt wurde, wurde ein Strom von 6,1 Tonnen pro Stunde bei 1,2 bar absolut erhalten, der im Wesentlichen Wasser und Ammoniak enthielt. Das Kopfprodukt wurde kondensiert. 6,0 Tonnen pro Stunde dieses Stromes wurden als Rückfluss in die Kolonne zurückgeführt. Die verbleibenden 0,1 Tonnen pro Stunde, die eine Ammoniakkonzentration von 20 Gew.-% enthielten, wurden verbrannt. Am Sumpf der Kolonne wurden 59,3 t/h Wasser mit einer Ammoniakkonzentration von 10 ppm erhalten.

### Vergleichsbeispiel 2

Es wurde nach Beispiel 1 aus der Anmeldung WO 0164333 (A2) und anschließender Phasentrennung Mononitrobenzol hergestellt.

Die mehrstufige Wäsche des so erhaltenen Mononitrobenzols (Schritt a des erfindungsgemäßen Verfahrens) ergab zwei Abwasserströme. Die erste Wäsche mit einem Massenverhältnis Wasser zu Mononitrobenzol von 0,4 führte zu einem Abwasser mit 6500 Gew.-ppm phenolischen Nebenkomponenten und 3100 Gew.-ppm anderer aromatischer Komponenten wie Benzol und Mononitrobenzol, das Abwasser aus der zweiten Wäsche mit einem Verhältnis Wasser zu Mononitrobenzol von 0,3 enthielt zusammen 3225 Gew.-ppm Benzol und Mononitrobenzol. Die organischen Nebenbestandteile beider Abwasserströme wurden durch Strippung mit Wasserdampf entfernt (Schritt b des erfindungsgemäßen Verfahrens). Der absolute Druck bei der Strippung betrug 3 bar. Der Verbrauch an Wasserdampf im Rahmen von Schritt b betrug 8,3 Tonnen pro Stunde bei einem der Strippung zugeführten Abwasser-Strom von 58 Tonnen pro Stunde.

Im Kopf der zur Strippung verwendeten Kolonne wurden 7,4 Tonnen pro Stunde eines Gemisches erhalten, welches vor allem Wasser, Benzol, nicht-aromatische organische Bestandteile und Mononitrobenzol enthielt. Das genannte Kopfprodukt wurde kondensiert und auf 40°C abgekühlt. Anschließend wurde die Flüssigkeit einem Abscheider zugeführt. Im Abscheider bildeten Mononitrobenzol, Benzol und nicht-aromatische organische Bestandteile eine organische Phase, die in die Wascheinheit zurückgeführt wurde. Die wässrige Phase aus dem Abscheider, die mit organischen Bestandteilen gesättigt war, wurde zur Strippungseinheit zurückgeführt. Am Sumpf der Strippungskolonne fielen 59,4 Tonnen Abwasser pro Stunde mit 500 Gew.-ppm Ammoniak an.

### Beispiel 3

Es wurde nach Beispiel 1 aus der Anmeldung WO 0164333 (A2) und anschließender Phasentrennung Mononitrobenzol hergestellt.

Die mehrstufige Wäsche des so erhaltenen Mononitrobenzols (Schritt a des erfindungsgemäßen Verfahrens) ergab zwei Abwasserströme. Die erste Wäsche mit einem Massenverhältnis Wasser zu Mononitrobenzol von 0,4 führte zu einem Abwasser mit 6500 Gew.-ppm phenolischen Nebenkomponenten und 3100 Gew.-ppm anderer aromatischer Komponenten wie Benzol und Mononitrobenzol, das Abwasser aus der zweiten Wäsche mit einem Verhältnis Wasser zu Mononitrobenzol von 0,3 enthielt zusammen 3225 Gew.-ppm Benzol und Mononitrobenzol. Die organischen Nebenbestandteile beider Abwasserströme wurden durch Strippung mit Wasserdampf entfernt (Schritt b des erfindungsgemäßen Verfahrens). Der absolute Druck bei der Strippung betrug 3 bar. Der Verbrauch an Wasserdampf im Rahmen von Schritt b betrug 8,3 Tonnen pro Stunde bei einem der Strippung zugeführten Abwasser-Strom von 58 Tonnen pro Stunde.

Im Kopf der zur Strippung verwendeten Kolonne wurden 7,4 Tonnen pro Stunde eines Gemisches erhalten, welches vor allem Wasser, Benzol, nicht-aromatische organische Bestandteile und Mononitrobenzol enthielt. Das genannte Kopfprodukt wurde kondensiert und auf 40°C abgekühlt. Anschließend wurde die Flüssigkeit einem Abscheider zugeführt. Im Abscheider bildeten Mononitrobenzol, Benzol and nicht-aromatische organische Bestandteile eine organische Phase, die in die Wascheinheit zurückgeführt wurde. Die wässrige Phase aus dem Abscheider, die mit organischen Bestandteilen gesättigt war, wurde zur Strippungseinheit zurückgeführt.

Am Kopf der Ammoniak-Destillationskolonne, die mit 7,4 Tonnen Frischdampf die Stunde beheizt wurde, wurde bei 1,2 bar absolut ein Strom von 6,1 Tonnen pro Stunde erhalten, der im Wesentlichen Wasser und Ammoniak enthielt. Das Kopfprodukt wurde kondensiert. 6,0 Tonnen pro Stunde dieses Stromes wurden als Rückfluss in die Kolonne zurückgeführt. Die verbleibenden 0,1 Tonnen pro Stunde, die eine Ammoniakkonzentration von 20 Gew.-% enthielten wurden verbrannt. Am Sumpf der Kolonne wurden 59,3 t/h Wasser mit einer Ammoniakkonzentration von 10 ppm erhalten.

Die erfindungsgemäßen Beispiele 1 und 3 führten gegenüber Vergleichsbeispiel 2 zu einer Reduktion des Ammoniakgehaltes im Abwasser von 500 ppm auf 10 ppm.

In Beispiel 1 betrug der Verbrauch an Wasserdampf 7,4 Tonnen pro Stunde weniger als in Beispiel 3.

Der aus Beispiel 1 und 3 resultierende Abwasserstrom kann unmittelbar der biologischen Abwasseraufbereitung zugeführt werden, wobei im Gegensatz zum Vergleichsbeispiel 2 die Nitrifikation unterbleiben kann.

## Patentansprüche

1. Verfahren zur Aufarbeitung von Abwässern, die bei der Aufreinigung von rohen aromatischen Nitroverbindungen nach der Nitrierung von aromatischen Verbindungen erhalten werden, umfassend folgende Schritte:
(a) Einstufiges oder mehrstufiges Waschen der rohen aromatischen Nitroverbindung unter Erhalt mindestens einer organischen Phase und mindestens einer wässrigen Phase sowie Abtrennung der wässrigen Phase oder der wässrigen Phasen, wobei Schritt (a) die Zugabe einer Base umfasst, die sich von Ammoniak unterscheidet, und anschließend
(b) optional Entfernung organischer Bestandteile aus mindestens einem Teil der in Schritt (a) erhaltenen wässrigen Phase oder wässrigen Phasen durch Strippung vorzugsweise mit Wasserdampf, anschließend
(c) Entfernung organischer Verbindungen aus mindestens einem Teil der aus Schritt (a) beziehungsweise Schritt (b) resultierenden wässrigen Phase oder wässrigen Phasen durch thermolytische Behandlung , anschließend
(d) destillative Abreicherung von Ammoniak aus zumindest einem Teil der aus Schritt (c) resultierenden wässrigen Phase oder wässrigen Phasen, und anschließend
(e) optional Zuführung zumindest eines Teiles der aus Schritt (d) resultierenden wässrigen Phase zu einer biologischen Abwasseraufbereitung.

2. Verfahren nach Anspruch 1, wobei Schritt (a) die Zugabe eines Alkalimetallhydroxids als Base umfasst.

3. Verfahren nach Anspruch 1 oder 2, wobei die Abwässer bei der Aufreinigung von rohem aromatischem Mononitrobenzol nach Nitrierung von Benzol erhalten werden.

4. Verfahren nach einem oder mehreren der Ansprüche 1 bis 3, wobei der pH-Wert der wässrigen Phase nach Stufe (a) mindestens 7 beträgt.

5. Verfahren nach einem oder mehreren der Ansprüche 1 bis 4, wobei Stufe (b) ausgeführt wird.

6. Verfahren nach Anspruch 5, wobei die aus Stufe (b) resultierende Dampfphase zur indirekten Wärmeübertragung in Stufe (d) verwendet wird.

7. Verfahren nach Anspruch 5 oder 6, wobei die aus Stufe (b) resultierende Dampfphase als Wärmeüberträger in einen Verdampfer im Rahmen von Stufe (d) eingeführt wird.

8. Verfahren nach Anspruch 6 oder 7, wobei der Wärmeüberträger in Anschluss an die Stufe (d) zumindest teilweise in die Stufe (a) zurückgeführt wird.

9. Verfahren nach einem oder mehreren der Ansprüche 6 bis 8, wobei der Wärmeüberträger in kondensierter Form in Anschluss an die Stufe (d) einer Phasentrennung unter Erhalt einer wässrigen Phase und einer organischen Phase unterzogen wird, wobei die organische Phase in die Stufe (a) und die wässrige Phase in die Stufe (b) zurückgeführt wird.

10. Verfahren nach einem oder mehreren der Ansprüche 1 bis 8, wobei die Destillation gemäß Schritt (d) in einer Destillationskolonne bei einem absoluten Druck von 0,1 bis 10 bar, gemessen im Kopf der Kolonne, durchgeführt wird.

11. Verfahren nach einem oder mehreren der Ansprüche 1 bis 10, wobei die destillative Abreicherung von Ammoniak gemäß Schritt (d) in einer Destillationskolonne bei einer Temperatur von 50 bis 160 °C, gemessen im Kopf der Kolonne, durchgeführt wird.

12. Verfahren nach einem oder mehreren der Ansprüche 1 bis 11, wobei der Gehalt an Ammoniak in der wässrigen Phase in Anschluss an Schritt (d) höchstens 100 ppm beträgt.

13. Verfahren nach einem oder mehreren der Ansprüche 1 bis 12, wobei die thermolytische Behandlung bei einem absoluten Druck von 50 bis 350 bar und einer Temperatur von 150 bis 500 °C durchgeführt wird.

14. Verfahren nach einem oder mehreren der Ansprüche 1 bis 13, wobei die aus Schritt (c) resultierende wässrige Phase oder wässrige Phasen vollständig Schritt (d) zugeführt werden.

15. Verfahren nach einem oder mehreren der Ansprüche 1 bis 14, wobei Schritt (e) unmittelbar anschließend an Schritt (d) ausgeführt wird.

## Claims

1. A process for working up wastewaters which are obtained in the purification of crude aromatic nitro compounds after the nitration of aromatic compounds, comprising the following steps:
(a) single-stage or multistage washing of the crude aromatic nitro compound to obtain at least one organic phase and at least one aqueous phase, and removal of the aqueous phase or of the aqueous phases, step (a) comprising the addition of a base other than ammonia, and then
(b) optional removal of organic constituents from at least a portion of the aqueous phase or aqueous phases obtained in step (a) by stripping, preferably with steam, then
(c) removal of organic compounds from at least a portion of the aqueous phase or aqueous phases resulting from step (a) or step (b) by thermolytic treatment, then
(d) distillative depletion of ammonia from at least a portion of the aqueous phase or aqueous phases resulting from step (c), and then
(e) optional supply of at least a portion of the aqueous phase resulting from step (d) to a biological wastewater treatment.

2. The process according to claim 1, wherein step (a) comprises the addition of an alkali metal hydroxide as a base.

3. The process according to claim 1 or 2, wherein the wastewaters are obtained in the purification of crude aromatic mononitrobenzene after nitration of benzene.

4. The process according to one or more of claims 1 to 3, wherein the pH of the aqueous phase after stage (a) is at least 7.

5. The process according to one or more of claims 1 to 4, wherein stage (b) is performed.

6. The process according to claim 5, wherein the vapor phase resulting from stage (b) is used for indirect heat transfer in stage (d).

7. The process according to claim 5 or 6, wherein the vapor phase resulting from stage (b) is introduced as a heat carrier into an evaporator in the course of stage (d).

8. The process according to claim 6 or 7, wherein the heat carrier after stage (d) is recycled at least partly into stage (a).

9. The process according to one or more of claims 6 to 8, wherein the heat carrier in condensed form after stage (d) is subjected to a phase separation to obtain an aqueous phase and an organic phase, the organic phase being recycled into stage (a) and the aqueous phase into stage (b).

10. The process according to one or more of claims 1 to 8, wherein the distillation in step (d) is performed in a distillation column at an absolute pressure of 0.1 to 10 bar, measured at the top of the column.

11. The process according to one or more of claims 1 to 10, wherein the distillative depletion of ammonia in step (d) is performed in a distillation column at a temperature of 50 to 160°C, measured at the top of the column.

12. The process according to one or more of claims 1 to 11, wherein the ammonia content in the aqueous phase after step (d) is not more than 100 ppm.

13. The process according to one or more of claims 1 to 12, wherein the thermolytic treatment is performed at an absolute pressure of 50 to 350 bar and a temperature of 150 to 500°C.

14. The process according to one or more of claims 1 to 13, wherein the aqueous phase or aqueous phases resulting from step (c) is/are supplied completely to step (d).

15. The process according to one or more of claims 1 to 14, wherein step (e) is performed immediately after step (d).

## Revendications

1. Procédé pour le traitement d'eaux résiduaires qui, après la nitration de composés aromatiques, sont obtenues lors de la purification de composés nitrés aromatiques bruts, comprenant les étapes suivantes :
(a) lavage en un ou plusieurs stades du composé nitré aromatique brut, avec obtention d'au moins une phase organique et d'au moins une phase aqueuse ainsi que séparation de la phase aqueuse ou des phases aqueuses, l'étape (a) comprenant l'addition d'ne base qui est différente de l'ammoniac, et ensuite
(b) élimination optionnelle de composants organiques à partir d'au moins une partie de la phase aqueuse ou des phases aqueuses obtenue(s) dans l'étape (a), par entraînement de préférence à la vapeur d'eau, puis
(c) élimination de composants organiques à partir d'au moins une partie de la phase aqueuse ou des phases aqueuses résultant de l'étape (a) ou respectivement de l'étape (b), par traitement thermolytique, ensuite
(d) abaissement par distillation de la teneur en ammoniac d'au moins une partie de la phase aqueuse ou des phases aqueuses résultant de l'étape (c), et ensuite
(e) envoi optionnel d'au moins une partie de la phase aqueuse résultant de l'étape (d), à un traitement biologique d'eaux résiduaires.

2. Procédé selon la revendication 1, dans lequel l'étape (a) comprend l'addition d'un hydroxyde de métal alcalin en tant que base.

3. Procédé selon la revendication 1 ou 2, dans lequel les eaux résiduaires sont obtenues lors de la purification de mononitrobenzène aromatique brut, après nitration du benzène.

4. Procédé selon une ou plusieurs des revendications 1 à 3, dans lequel après l'étape (a) le pH de la phase aqueuse est d'au moins 7.

5. Procédé selon une ou plusieurs des revendications 1 à 4, dans lequel on effectue l'étape (b).

6. Procédé selon l'étape 5, dans lequel la phase vapeur résultant de l'étape (b) est utilisée dans l'étape (d) pour le transfert indirect de chaleur.

7. Procédé selon la revendication 5 ou 6, dans lequel la phase vapeur résultant de l'étape (b) est utilisée comme caloporteur dans un évaporateur dans le cadre de l'étape (d).

8. Procédé selon la revendication 6 ou 7, dans lequel à la suite de l'étape (d) le caloporteur est au moins en partie renvoyé dans l'étape (a).

9. Procédé selon une ou plusieurs des revendications 6 à 8, dans lequel à la suite de l'étape (d) le caloporteur est soumis sous forme condensée à une séparation de phases, avec obtention d'une phase aqueuse et d'une phase organique, la phase organique étant renvoyée dans l'étape (a) et la phase aqueuse étant renvoyée dans l'étape (b).

10. Procédé selon une ou plusieurs des revendications 1 à 8, dans lequel on effectue la distillation selon l'étape (d) dans une colonne de distillation sous une pression absolue de 0,1 à 10 bars, mesurée à la tête de la colonne.

11. Procédé selon une ou plusieurs des revendications 1 à 10, dans lequel on effectue l'abaissement par distillation de la teneur en ammoniac selon l'étape (d) dans une colonne de distillation à une température de 50 à 160 °C, mesurée à la tête de la colonne.

12. Procédé selon une ou plusieurs des revendications 1 à 11, dans lequel à la suite de l'étape (d) la teneur en ammoniac de la phase aqueuse est d'au maximum de 100 ppm.

13. Procédé selon une ou plusieurs des revendications 1 à 12, dans lequel on effectue le traitement thermolytique sous une pression absolue de 50 à 350 bars et à une température de 150 à 500°C.

14. Procédé selon une ou plusieurs des revendications 1 à 13, dans lequel on envoie en totalité à l'étape (d) la phase aqueuse ou les phases aqueuses résultant de l'étape (c).

15. Procédé selon une ou plusieurs des revendications 1 à 14, dans lequel l'étape (e) est effectuée immédiatement à la suite de l'étape (d).
